# EUROPEAN PATENT APPLICATION

(11) **EP 4 837 816 A1**
(43) Date of publication of application: **11.11.2026**
(21) Application number: 25175118.6
(22) Date of filing: 08.05.2025
(51) Int. Cl.: B61L 23/04, B61L 27/57, G06T 7/00, G06V 10/82

(54) **VEHICLE INSPECTION SYSTEM**

(71) Applicant: Hitachi, Ltd., Tokyo 100-8280 (JP)
(72) Inventor: KILSBY, Paul, Slough, SL3 9LL (GB); AH KUN, Leonard, Slough, SL3 9LL (GB)
(74) Representative: Mewburn Ellis LLP

(57) **Abstract**

There is provided a vehicle inspection system for identifying faults on a railway vehicle. The system comprises: a data input module, a localisation, and a fault identification module. The data input module is configured to receive a data frame comprising sensor data indicative of a status of the railway vehicle. The localisation module is configured to: determine a relative location on the railway vehicle which corresponds to the sensor data in the data frame, and use the relative location to retrieve a reference frame from a database of reference frames, the reference frame comprising reference sensor data which corresponds to the relative location on the railway vehicle. The fault identification module is configured to: provide the data frame and the reference frame to a visual large language model (VLM) to determine from the data frame and the reference frame if the railway vehicle comprises a fault in the determined location.

## Description

### Field of the Invention

The present invention relates to a railway vehicle inspection system and a method for identifying faults on a railway vehicle.

### Background

Vehicle rolling stock must be inspected for faults regularly to prevent damage or system failures. For examples, railway vehicles such as trains must be regularly inspected for mechanical faults or damage in order to schedule maintenance and repairs.

Typically, railway vehicles may be inspected manually by workers who are trained to identify faults. However, such methods are slow and require inspectors to have significant knowledge of the vehicle they are inspecting. Therefore such methods are prone to human error and can be inaccurate.

Some systems may use machine vision techniques to inspect images of railway vehicles. However, such systems are unable to reliably detect previously unseen faults and require human workers to identify the type of detected fault and subsequent maintenance needed which can be time-consuming and costly.

Therefore, there is a desire for a reliable and accurate an automated vehicle inspection system. The present invention has been devised in light of the above considerations.

### Summary of the Invention

Broadly, the present disclosure provides a vehicle inspection system for automatically detecting and reporting faults in rolling stock using one or more pre-trained models to analyse incoming sensor data. The vehicle inspection system is configured to match the incoming sensor data to a location on the rolling stock so as to focus the attention of the one or more pre-trained models thus improving the detection and identification accuracy of the one or more models.

Therefore, in a first aspect of the present invention there is provided a vehicle inspection system for identifying faults on a vehicle, the system comprising: a data input module configured to: receive a data frame comprising sensor data indicative of a status of the vehicle; a localisation module configured to: determine a location on the vehicle which corresponds to the sensor data in the data frame, and use the location to retrieve a reference frame from a database of reference frames, the reference frame comprising reference sensor data which corresponds to the determined location on the vehicle; and a fault identification module configured to: provide the data frame and the reference frame to a Vision Language Model (VLM) to determine from the data frame and the reference frame if the vehicle has a vehicle fault in the determined location.

Advantageously, the present inventors have found that by determining where on the vehicle the sensor data corresponds to and providing reference sensor data corresponding to that part of the vehicle to the VLM, the VLM is able to more accurately identify known and unknown faults on the vehicle since a comparison between the sensor data and reference data can be performed. Accordingly, this approach improves the detection performance of VLMs out-of-the-box, by targeting their attention to particular areas of the vehicle. As a result, the frequency of vehicle inspection tasks can be increased compared to existing methods of vehicle inspection.

The vehicle may be a railway vehicle, although the system is also applicable to other long linear assets such as roads and rail tracks. The system may be configured to detect and identify faults on rolling stock such as locomotives, carriages, wagons, or other vehicles used on a railway. The vehicle may be an elongate vehicle. For example, the vehicle may be a train comprising one or more carriages. The faults may be understood to refer to any defect, issue, damage, or other visible artefact present on the vehicle which is not part of the original vehicle design.

The data frame (which can by referred to as a data array), may include image data or other forms of data (such as acoustic data, depth data, such as from a time-of-flight sensor, or the like). As discussed above, the data frame contains data received from any kind of sensor, wherein the data is indicative of the status of the vehicle.

Each of the steps discussed herein may be repeated for each data frame of a plurality of data frames. For example, the plurality of data frames may form an inspection video of a vehicle. In this way, a full, automatic inspection of the railway vehicle may be performed.

The VLM may be understood to be a multimodal, generative Al (artificial intelligence) model capable of understanding and processing video, image, and text data. For example, the VLM may be a LLM (large language model) configured to receive the sensor data. The VLM may be accessible, by the fault identification module, via the cloud.

The fault identification module may be configured to prompt the VLM to identify one or more vehicle faults and generate a description of the identified fault. The VLM may be further configured to (e.g., by prompt) identify the vehicle fault and generate a description of the identified vehicle fault. In some examples, the VLM may report that no vehicle fault is detected in the data frame.

The system may further comprise a pre-detection module configured to detect one or more predetermined faults and/or anomalies in the data frame. For example, the pre-detection module may comprise an object detection module for detecting pre-determined faults and/or an anomaly detection module for detecting changes between the reference frame and the data frame. In some examples, the pre-detection module may be configured to provide the data frame to the fault identification module (only) when a predetermined fault or an anomaly is detected in the data frame. Filtering the data frames provided to the VLM in this way can help to focus the attention of the VLM thus resulting in more accurate fault identification. Further, the filtering can reduce an overall inspection processing time of the system since only data frames identified as containing a fault need be provided to the VLM.

The pre-detection module may form part of a local processing resource, and the fault identification module may form part of a remote or cloud based processing resource. Accordingly, pre-filtering the data frames in this way can increase the inspection speed and communication requirements of the inspection system since fewer frames need to be transmitted to the cloud.

The pre-detection module may comprise an object detection module configured to provide the data frame to a pretrained object detection model and receive, from the pretrained object detection module, a determination of whether one or more predetermined vehicle faults (e.g., known faults) are present in the data frame. The object detection module may be configured to provide the determination to the fault identification module. The fault identification module may be configured to provide the determination to the VLM to generate a description of the detected predetermined vehicle faults.

The object detection module may be configured to output a location in the data frame of the one or more predetermined vehicle faults. The fault identification module may be configured to provide the determined location to the VLM. For example, the object detection model may be configured to output the coordinates of a bounding box (which may be any shape) surrounding a detected vehicle fault in the data frame. The pre-detection module may be configured to provide the coordinates to the fault identification module, and, optionally, an identifier of the detected vehicle fault, for prompting of the VLM. The VLM may then be configured to confirm the detected vehicle fault and generate a description of the detected vehicle fault.

The object detection module may comprise or be in communication with a pre-trained object detection model configured to detect predetermined objects in the data frame, wherein the predetermined objects may be predetermined (i.e., known) vehicle faults.

The object detection module may be trained using training data frames comprising examples of the predetermined faults. For example, one or more bolts may be removed from the vehicle to generate a training data frame comprising a missing bolt fault. The use of an object detection model to detect known faults in this way has been found to improve the system performance in detecting small vehicle faults and vehicle features which are small in size.

The object detection module may be a third-party pretrained object detector which has been fine-tuned using the aforementioned training data. For example, suitable object detectors may be RT-DETR (i.e., real time detection transformer), YOLO (You Only Look Once), or other object detection models, for example, which may be configured to operate on edge processing chips specifically.

The system may further comprise an anomaly detection module configured to provide the data frame and the reference frame to an anomaly detection model, which may also be referred to as a change detection module. The anomaly detection model may be configured to compare the data frame to the reference frame and determine, from the comparison, whether the data frame comprises an anomaly. An anomaly may be understood to be a change or difference in the sensor data of the date frame compared to the sensor date in the reference frame which may be indicative of a vehicle fault. In this way, previously unknown or unforeseen vehicle faults may be accurately detected on the vehicle without requiring existing signatures of those faults to be known or training data comprising examples of these faults.

The anomaly detection model may be a change detection model based on, for example, a U net architecture, a simultaneous flow and optical change simulation model, a Siamese model or a triplet model. Such models have been found to be effective at detecting changes between the data frame and reference frame even in examples where the data frame and reference frame are unaligned. Accordingly, the anomaly detection model is configured to detect relative anomaly features rather than e.g., absolute differences between the sensor data or pixel values.

In some examples, the anomaly detection model may operate by detecting and encoding features of the data frame into a latent space. The model may then re-construct the data frame from the encoded features into how it should look (e.g., as a vehicle in a known, undamaged condition) and then use a reconstruction error between the input and reconstructed data frames to determine a degree of anomaly. If the degree of anomaly exceeds a predetermined threshold degree, then the anomaly detection module may be configured to provide the data frame to the fault identification module.

The anomaly detection model may be configured to output information identifying a target zone in the data frame where the anomaly was detected. The anomaly detection module may be configured to provide the information identifying the target zone to the fault identification module. For example, the information identifying the target zone may be coordinates of a bounding box or segmentation boundary within the data frame.

The fault identification module may be configured to provide the information identifying the target zone to the VLM, for example, as a prompt in which the VLM may be instructed to identify faults in the target zone. In some examples, as discussed below, the target zone may be used to pre-process the data frame to highlight the target zone and/or mask areas of the data frame external to the target zone. This pre-processing has been found to increase the detection accuracy and reduce a processing time of the VLM by focusing its attention on the area of the data frame containing the anomaly.

The fault identification module may be further configured to pre-process the data frame prior to providing the data frame to the VLM. The pre-processing may comprise masking or filtering the data frame to highlight a target zone. In other examples, the pre-processing may comprise performing operations such as cropping, aligning, or adjusting properties of the data frame.

When the system comprises an anomaly detection module, pre-processing the data frame may comprise: applying a filter to the data frame to highlight the target zone in the data frame. Accordingly, the VLM can be focused onto a particular portion of the data frame to identify what the detected anomaly may be and if that anomaly may be a fault.

Further, when the system comprises an object detection module, pre-processing the data frame may comprise: applying a filter to the data frame to highlight an area (which may also be referred to as a target zone) of the data frame wherein an object is detected (e.g., a predetermined vehicle fault). Accordingly, the VLM can be focused onto a particular portion of the data frame to verify and describe the detected vehicle fault from the object detector.

In the above examples, the target zone may be a spatial area of the data frame or, for example, a target frequency range of the sensor data in the data frame (e.g., if the sensor data may be acoustic or motion data).

Applying the filter may comprise masking one or more areas of the data frame which are external to the target zone. Masking the one or more areas may comprise one or more of, erasing, blacking out, blurring etc the data frame around the target zone.

The sensor data may be spatial data indicative of a status of the vehicle. For example, the spatial data may be optical data received from a camera configured to capture images of the vehicle. Thus, the data frame may be a video frame comprising the spatial data. e.g., the spatial data may be an optical image. The spatial data may be infrared sensor data, optical sensor data, ultrasound data, x-ray data etc. Accordingly, the data frame may be an image frame, and the sensor data may be (e.g., optical, infrared, or other sensor) image data comprising a portion of the vehicle.

In other examples, the sensor data may be received from a different type of sensor such as an acoustic sensor, or motion sensor such as an accelerometer configured to determine vibrations indicative of a status of different portions of the vehicle.

The reference frame may comprise sensor data of the same type as the data frame, e.g., image data. For example, the database of reference frames may comprise video data corresponding to one or more vehicles, the video data comprising a plurality of data frames (i.e., video frames) comprising sensor data (e.g., image data) corresponding to different portions of the vehicle.

The reference frames may be pre-collected data frames comprising sensor data corresponding to the vehicle in a known state. For example, each reference frame may be an image of the vehicle in a known state in which no vehicle fault is present or in which a known fault is present. For example, a vehicle fault may be detected which is determined does not need maintenance and the reference frames for that vehicle updated with the data frame in which the vehicle fault is detected. Accordingly, future inspections may be performed without re-detecting the same vehicle fault.

Retrieving the reference frame may comprise calculating a transformation or translation distance between the data frame and each of a plurality of reference frames in the database, and selecting the reference frame comprising the lowest transformation distance. The reference frames corresponding to the lowest transformation distance may be stored in the database with a location on the vehicle. The data frame may be assigned to the determined location. The determined location may then be used to retrieve the reference frame one or more times from the database.

For example, calculating the transformation distance may comprise using image registration techniques. For example, the image registration may comprise performing feature detection wherein salient points, edges, or other relevant features are identified in from the data frame and reference frames. Next, corresponding features may be identified and matched between the data frame and reference frames. Based on the matched features, an initial transformation may be estimated to align the images and a transformation distance recalculated (e.g., as a similarity metric). Accordingly, as each reference image in the database corresponding to different points on a vehicle is assessed the transformation distance may decrease as the analysis moves closer to the reference frame corresponding to the point on the vehicle which corresponds to the data frame.

In other examples, retrieving the reference frame may comprise using an object detection model to detect an object in the data frame, determine coordinates for a bounding box around the detected object, compare the coordinates to a reference bounding box around the same object in one or more of the reference frames to obtain a difference metric, and identify the location on the vehicle based on the reference frame having the lowest difference metric. In some examples, the object detection model may be the same model discussed above for detecting predetermined vehicle faults.

The localisation module may be configured to preprocess the data frame based on a difference between the data frame and the reference frame. The difference may be, for example, the difference metric or transformation distance discussed above. For example, the preprocessing may comprise performing one or more crops to translate the data frame and decrease the difference between the data frame and reference frame. The preprocessing may comprise non-transforming steps to avoid introducing artefacts to the data frame. Non-transforming processing may by understood to refer to techniques that don't alter the fundamental pixel values or spatial relationships of the data frame, but instead manipulate its characteristics like brightness, contrast, sharpness, rotation, or borders.

In some examples, the localisation module may be configured to remove or mask one or more features from the data frame so that the removed features are not provided to the VLM. In this way, the VLM can be prevented from inspecting certain vehicle features. Removing or masking one or more features may comprise using an object detection module to detect the one or more features and/or using the determined location and determined distance (e.g., transformation distance) between the data frame and reference frame to mask known features from the reference frame which are also in the reference frame. This may be useful for vehicle features which may be expected to change in appearance over time or which may be subject to a separate inspection system e.g., HVAC systems on a train. In this way, the automatic inspection system can be adaptable to user preferences and processing time, for example, in inspecting vehicle features which do not need to be inspected, can be reduced.

The localisation module may store the location on the vehicle corresponding to the data frame for future inspection. For example, data frame may be stored in relation to the determined location with previously collected data frames in that same location on the vehicle. The determined location may be transmitted to a client device along with the reference frame and the data frame for a user to inspect. In this way, users may inspect a history of a portion of the vehicle at that location to assess any ongoing damage or vehicle faults in that portion.

As mentioned above, the VLM may be configured to identify one or more faults in the data frame and generate a description of the one or more faults. The fault identification module may be configured to construct a message based on the determination of whether the railway vehicle has a fault in the determined location and/or based on the description from the VLM, and transmit the message to a client device. The client device may be associated with a maintenance and repair team. In some examples, the message may be transmitted to a maintenance coordination module for ordering and/or scheduling repair of the identified fault.

The VLM may be configured to determine one or more maintenance steps for repairing the detected vehicle fault. Determining the one or more maintenance steps may comprise searching maintenance data associated with the vehicle and determining one or more maintenance steps associated with the identified vehicle fault. The determined maintenance steps may be included in the aforementioned message.

In some examples, the VLM may be configured to determine a severity level of the identified vehicle fault. When the severity is above a predetermined threshold severity level the fault identification module may be configured to generate a notification. For example, the fault identification module may be configured to transmit said notification to one or more client devices.

The system may comprise a data collection subsystem (or system) comprising one or more sensor modules. The one or more sensor modules are configured to acquire the data frame for provision to the data input module. As mentioned above, the data frame may be one of a plurality of data frames for inspecting.

For example the sensor module may be a static sensor module such as an optical or infrared camera or acoustic sensor. The static sensor may be configured to acquire data frames comprising sensor data from the vehicle as the vehicle moves relative to the static sensor. For example static sensor module it may be located in a location adjacent to, above, or below a vehicle inspection zone configured to receive a vehicle moving therethrough.

In other examples, the sensor module may be located on a movable sensor device such as a drone or an articulated arm configured to move the sensor relative to the vehicle and acquire sensor data. For example, the data frame may be received from an optical camera mounted to a drone such as an UAV (unmanned aerial vehicle).

The data collection subsystem may comprise a vehicle detector configured to detect the presence of the vehicle (e.g., in the vehicle inspection zone) and trigger the sensor module to collect a plurality of data frames including the data frame upon detection of the vehicle. For example, the vehicle detector may comprise a light gate, a camera, an RFID sensor, a pressure sensor etc.

The data collection subsystem may comprise a vehicle identification module configured to identify the vehicle. For example, vehicle identification module may be configured to identify a particular vehicle in a fleet, and/or the type (e.g., model) of vehicle. The localisation module may be configured to use the vehicle identity to determine a location on the vehicle captured by the data frame. For example, localisation module may be configured to use the vehicle identity to identity a plurality of reference frames in the database which correspond to the identified vehicle (e.g., the particular vehicle or the vehicle model). Further, the vehicle identity may be used to identify the vehicle to be repaired when one or more vehicle faults are detected and/or to store inspection information in relation to that vehicle one the automatic inspection is complete.

For example, the vehicle identification module may comprise an RFID sensor configured to read an RFID tag of the vehicle. In other examples, the vehicle identification module may comprise an optical sensor such as a camera which is configured to identify the vehicle, and/or detect and identify a visual identification tag of the vehicle. For example, the vehicle identification module may be an ANPR (automatic number plate recognition) module which is configured to read a number plate of the vehicle.

The data collection subsystem may form part of a local subsystem of the vehicle inspection system. The local subsystem may additionally comprise a local processor, e.g., an edge processor comprising a GPU, which is configured to perform one or more of the above steps. For example, the local processor may comprise the localisation module and/or the pre-detection module discussed above. The vehicle inspection system may additionally comprise a central, cloud based processing resource (e.g., central processor, cloud based sub-system, etc) which comprises or is configured to communicate with the VLM. The central processing resource may additionally be connected to one or more additional local processors and data collection subsystems. Accordingly, the vehicle inspection system may comprise a plurality of data collection subsystems and edge-processors configured to collect and process data from a plurality of inspection locations.

The system may additionally comprise one or more client devices (e.g., computers or smart-phones) for communicating information about the detected vehicle faults to users such as maintenance engineers.

In an additional aspect there is provided a computer-implemented method of identifying faults on a railway vehicle comprising: receiving a data frame comprising sensor data indicative of a status of the railway vehicle; determining a location on the railway vehicle which corresponds to the sensor data in the data frame, and using the determined location to retrieve a reference frame from a database of reference frames, the reference frame comprising reference sensor data which corresponds to the determined location on the railway vehicle; and providing the data frame and the reference frame to a visual large language model (VLM) to determine from the data frame and the reference frame if the railway vehicle has a fault in the determined location.

The computer-implement method may be performed by a computer or a distributed computing system of a vehicle inspection system such as the system discussed in relation to the first aspect. The computer-implement method may comprise any of the optional features discussed above in relation to the first aspect.

In a further aspect there is provided a computer-readable medium comprising instructions which when executed on a computer cause the computer to perform the method of the preceding aspect.

Additional aspects may relate to systems configured to execute the computer-implemented method of aspect described herein. Specifically, the system may comprise a processor which is configured to execute the respective computer-implemented methods of any aspect described herein.

Additional aspects may provide a computer program comprising instructions which, when the program is executed by a computer, cause the computer to carry out the steps of a computer-implemented method of any aspect described herein. Further aspects may provide a computer-readable storage medium, having stored thereon, the computer program of the previous aspects.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** shows a diagram of a data collection system for collecting sensor data for inspection of a vehicle;
**Fig. 2** shows a diagram of a vehicle inspection system for detecting faults on a vehicle;
**Fig. 3** shows another diagram of the vehicle inspection system; and
**Fig. 4** shows a flow diagram of a method for inspecting a vehicle for faults.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

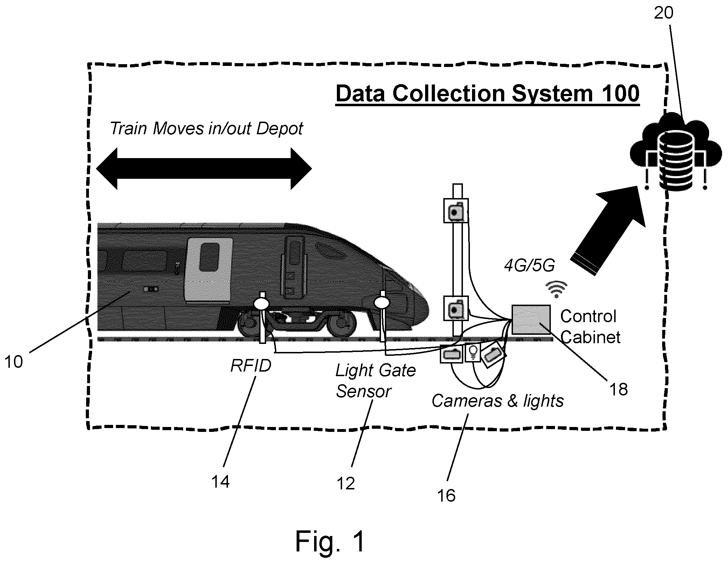

Fig. 1 shows a diagram of a data collection system 100 for collecting sensor data for inspection of a railway vehicle 10. In this example, the railway vehicle 10 is moving through an inspection zone containing the data collection system 100, such as a depot or station.

The data collection system 100 comprises a vehicle detection module 12 for detecting the presence of a vehicle 10 moving through the inspection zone, a vehicle identification module 14 for identifying the vehicle, and a sensor module 16 for collecting sensor data, such as video footage, for inspection of the vehicle 10. In this example, the vehicle detection module 12 comprises light gate sensors and the sensor module 16 is an optical camera configured to record video footage of the vehicle 10. As the vehicle 10 moves through the inspection zone, it is detected by the light gate sensors which trigger the camera to begin recording video. In this example, the vehicle identification module 14 comprises an RFID antenna configured to detect and read an RFID tag on the vehicle to identify the vehicle.

In other examples, the sensor module 16 may comprise one or more different types of sensors such as an infrared camera, an acoustic monitoring device, a scanner such as an xray device, a vibration sensor etc or any other sensor suitable for collecting information about a state of the vehicle 10.

The data collection system 100 further comprises a control cabinet 18 comprising a processor such as an industrial PC including a GPU. When the vehicle 10 has finished passing through the inspection zone, the video data, formed of a plurality of data frames (e.g., image frames) and the RFID data (i.e., comprising the vehicle identity) is saved locally to the processor and uploaded to a cloud database 20 for analysis.

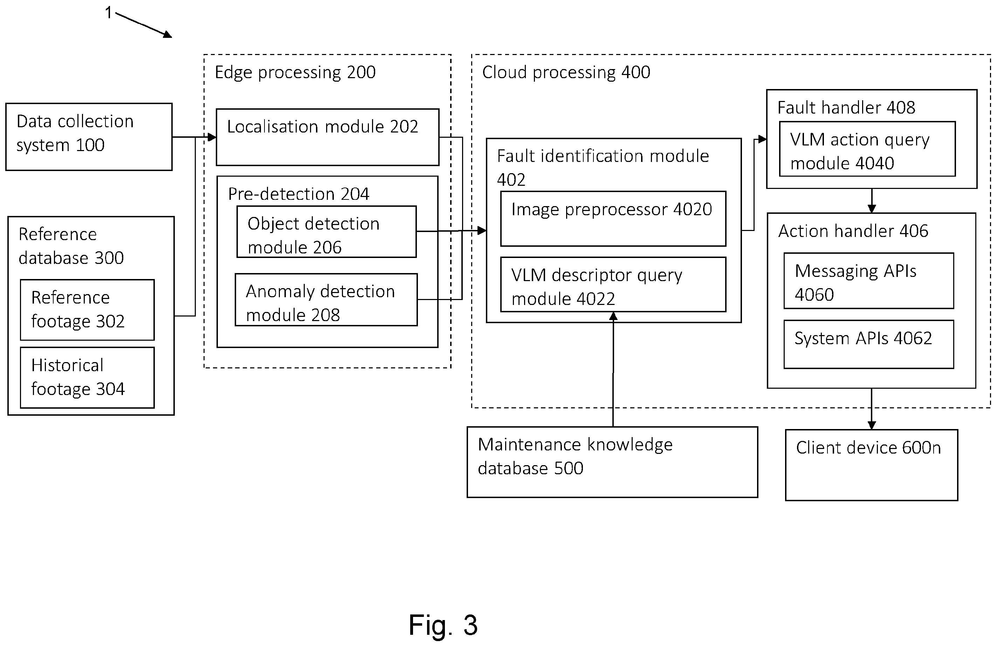

Once the video footage is uploaded to the cloud, machine learning and Al techniques are used to inspect the footage for vehicle faults as described below. In some examples, for example as shown in Fig. 3, some of the processing may be performed locally, on the edge, e.g., in the control cabinet 18, to preselect data frames in which a vehicle fault is detected before transmission to the cloud database 20.

Once the video footage is processed as described below and any vehicle faults detected, the inspection results may be output, for example, to a user device. In this way, any vehicle faults (e.g., defects or issues) detected by the system can be reviewed by an engineer and/or a maintenance action suggested.

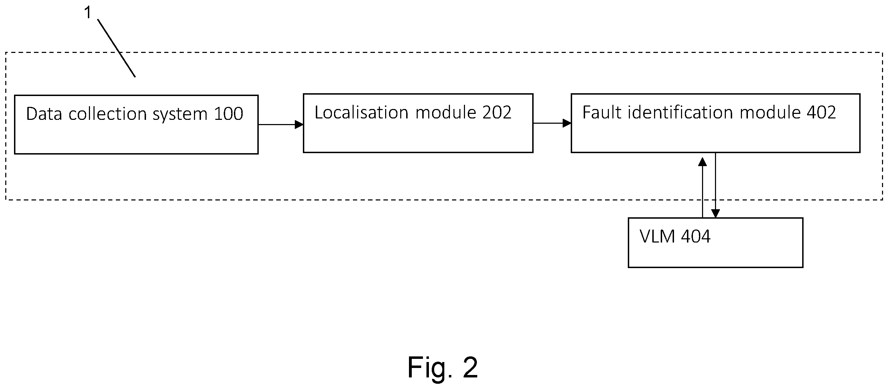

Fig. 2 shows a diagram of a vehicle inspection system 1 for detecting faults on a vehicle 10.

The vehicle inspection system 1 comprises a data collection system 100, e.g., as discussed above, for collecting a data frame comprising sensor data which is indicative of a status of the vehicle 10, a localisation module 202 for determining a location on the vehicle 10 which corresponds to the sensor data in that data frame, and a fault identification module 402 which is configured to provide the data frame to a visual large language model (VLM) 404 such as Microsoft Azure OpenAl's GPT to determine, from the data frame, if the vehicle comprises a vehicle fault and generate a description of the detected fault.

This process can be repeated for each of a plurality of data frames corresponding to different parts of the vehicle 10 until a full vehicle inspection is complete. The incoming data frames may be referred to herein as one or more query frames. If a vehicle fault is detected, then the fault identification module is configured to prompt the VLM 404 to generate a description of the detected fault and generate a notification to a user indicating the presence of the fault.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

In addition to determining the location on the vehicle 10 which is captured in each data frame, the localisation module 202 is configured to retrieve, from a database, a reference frame comprising reference sensor data which corresponds to the same location on the vehicle 10 as the data frame. For example, when the data frame is a video frame comprising an image of the vehicle 10, the reference frame may comprise an image of a same part of the vehicle 10 in a known state, for example, without any faults or defects. The fault identification module 402 is then configured to provide the reference frame, along with the data frame, to the VLM 404 to identify any faults identifiable in the data frame. It has been found that the VLM 404 is able to more accurately detect and describe faults, including previously unforeseen faults, when presented with a reference frame to compare to in this way.

Fig. 3 shows a more detailed diagram of the vehicle inspection system 1 wherein some modules of the vehicle inspection system 1 are implemented on an edge processing device 200 and others, such as the fault identification module 402 for querying the VLM, are located on a central (e.g., cloud based) processing resource 400.

For example, the edge processing device 200 may be included in the control cabinet discussed above in relation to Fig. 1. The modules of the edge processing device 200 may be configured to communicate with the modules of the central processing resource 400 via the internet.

In use, the data collection system 100 is configured to provide the data frames indicative of a status of the vehicle 10, e.g., via a local network cable, to an input module (not shown) of the edge processing device 200 for digital inspection. For example, as mentioned above, the data frames may by video frames of an inspection video captured by the data collection system 100.

Next, a localisation module 202 is configured to determine a location on the vehicle 10 that each data frame is capturing and use the location to retrieve a reference frame from a database 300 of reference frames.

As shown in Fig. 3, the reference database 300 may comprise historical 304 and/or reference 302 video footage of one or more vehicles in an undamaged or known state. The video footage is composed of image frames corresponding to different parts of each vehicle. The localisation module is configured to use the location of the data frame to retrieve the reference image which shows the same part of the vehicle 10 as the data frame.

The localisation process enables the data frame to be aligned with a reference frame in order to compare the two in an anomaly detection model (described below) and also allows detections in an object detection model (described below) to be assigned to specific areas of the vehicle 10 which can be used to provide further context as additional input data to the VLM 404.

The identification of the location and relevant reference frame is performed using image registration techniques to determine an alignment between each data frame and the reference frames. For example, the localisation may be performed by calculating a movement amount between successively received data frames from the data collection system 100. For the example of a railway vehicle moving through an inspection zone, the movement of the railway vehicle occurs predominantly in 1-axis, e.g. from left to right across the camera's field of view. Because of this, the movement between frames can be calculated relatively easily and efficiently.

The localisation module 202 may be configured to use one or more of the methods listed below (which may be used separately or in combination) to determine the interframe movement of the incoming data frames in order to localise each data frame:
- Tracking the movement of detected objects in successive data frames using an object detection model. For example, bounding boxes for objects detected in each frame (e.g. the light at the front of a train or the ends of carriage gangway connectors) can be tracked between frames and the movement of their corners or centroids used to determine the interframe movement e.g. the mean dx and dy of all boxes (taking into account boxes entering/ leaving the image and being occluded).
- Tracking the movement of computer vision features detected in successive frames. For example, computer vision features can be detected in each frame, and common features can be detected and characterized to enable matching between successive frames. The movement of the detected features can be used to determine the interframe movement. This method can be improved by constraining the matching and search of features to take place in specific parts of the frame based on the previous movement's magnitude and direction.
- Performing template matching between successive data frames. For example, computer vision features can be detected in an initial frame and then a template cropped section of the data frame around these features created. This template is then searched for in subsequent frames within a constrained area based on the previous movement's magnitude and direction. When a template leaves the image/ field of view of the data frame, a new feature and template can be detect-ed.

Once the movement is known between frames, the cumulative movement for the whole vehicle over the plurality of data frames can be used to align the data frames to a series of reference frames stored in the reference database 300. In this way, each data frame can be matched to a reference frame having a shortest alignment distance between features of the data frame and the same features of the reference frame.

Based on the calculated movements between frames, each data frame can be cropped and/or translated to be closely aligned with the corresponding reference frame. For example, starting from a known location on the vehicle 10 found using the object detection model, a pixel distance to any location can be aligned. Furthermore, if the reference data frames are recorded using a slow-moving vehicle 10 or at a higher frame rate than the incoming data frames, then entire reference frames may be very closely aligned to each of the incoming data frames without the need to crop or translate the data frames.

Returning to Fig. 3, the vehicle inspection system 1 additionally comprises a pre-detection module 204 for determining whether the data frame contains any previously known faults or anomalies which may be indicative of a fault, before the data frames are transmitted to the fault identification module 402 for analysis by the VLM 404.

The pre-detection module 204 comprises an object detection module 206 for detecting predetermined faults as objects in the data frame and an anomaly detection module 208 for detecting anomalies as changes in the sensor data between the corresponding reference frame and the data frame. The anomalies may be indicative of a previously unforeseen fault of the vehicle 10.

In some examples, the pre-detection module 204 may be used to filter the data frames so that only data frames in which a predetermined fault or an anomaly is detected are provided to the fault identification module 402 and the VLM 404 for further analysis. Implementing the pre-detection and the localisation modules on the edge processing device 200 as shown in Fig. 3 can therefore reduce the amount of data frames to be transmitted to the cloud thereby reducing a processing time and bandwidth requirements of the vehicle inspection system 1.

In other examples, the processes of one or more of the modules shown in the edge processing device 200 of Fig. 3 may instead be performed on the cloud by the cloud processing resource 400. In these examples, the edge processing device 200 may be configured to receive the data frames from the data collection system 100 and transmit the data frames directly to the cloud for digital inspection.

The object detection module 206 is configured to use an object detection model (which may be stored on the edge processing device 200) to detect specific faults, objects, or components of interest in each data frame. The object detection model may be any suitable open-source AI model such as a Real Time Detection Transformer (RT-DETR¹).

The object detection model is trained using data that has been collected, e.g., using the data collection system 100, and labelled to provide truth data. To generate the training data, vehicle faults can be simulated, for example, by removing bolts or panels from the vehicle 10 and labelling the area as containing a missing bolt fault.

The object detection model is able to run in real-time and act as a fast way to find potential faults in thousands of incoming data frames, which can then be fed into the VLM 404 by the fault identification module 402 to verify the presence and type of fault detected. Notably, the object detection model has been found to be particularly advantageous at detecting small details in the data frames which are indicative of a fault.

The anomaly detection module 208 is configured to determine if there is a change to the vehicle 10 from a normal state as shown in the retrieved reference frame. Object detection models cannot be used to feasibly find every type of fault due to the requirement for training data examples and potentially unforeseen faults being present. However, the anomaly detection module 208 is configured to find faults by comparing the incoming data frame, or region of interest, to the reference frame which shows what the normal state/condition of the vehicle 10 should be. Therefore, the anomaly detection module 208 can detect potentially previously unseen faults for which no training data is available.

The anomaly detection model is a deep learning change detection model based on, e.g., a U-net architecture that takes stacked data frames (i.e., the query data frame and reference data frame) as an input and outputs a change mask data frame (e.g., mask image) showing areas of dissimilarity between the query data frame and reference data frame.

The anomaly detection model is an un-supervised deep learning model which therefore does not require examples of data frames showing faults for training. Rather, only data frames showing vehicle components in a 'normal' condition are needed to operate the anomaly detection model (which are very easy to obtain from general footage collected). Further, the anomaly detection model is configured to be ¹ https://github.com/lyuwenyu/RT-DETR light-weight and able to run in near real-time so that it can be deployed on the edge, locally to the data collection system.

The anomaly detection module may operate according to one or both of the following two approaches. The first approach comprises change detection wherein a data frame (e.g., an image) of a component or section of the vehicle 10 in a known (e.g., "normal") condition is used as a reference data frame to compare to the query data frame to detect any changes.

The second approach comprises using a deep learning generalized anomaly detection model to determine a degree of anomaly in the data frame. The deep learning generalized anomaly detection model is an un-supervised model trained on many reference data frames (e.g., images) showing the vehicle 10 in a known (e.g., undamaged) condition. The model is then used to extract features from the incoming data frames, encode the features into a latent space, and then re-construct the data frame into how it should look when the vehicle is in a normal condition using the extracted features. A reconstruction error between the query data frame and the output (reconstructed) data frame is calculated and used to determine a degree of anomaly of the input data frame.

Once the localisation and, optionally, the object detection and/or anomaly detection, have been performed, the data frames are transmitted, along with the reference frame and additional information about any detected faults or anomalies, to the fault identification module 402 in the cloud. The fault identification module 402 (which may also be referred to as a fault descriptor module) is used to validate and describe the detected faults and anomalies by prompting the VLM 404.

The compute cost (if running in the cloud) and processing time of using a VLM 404 to process every data frame of an inspection video for performing a full vehicle inspection can be high. Therefore, the pre-detection module 202 can be used to reduce the data load to the VLM 404 in one or more of the following ways:
- Use the object detection model to detect objects of specific interest (e.g. a specific component or a fault) and then only send the frames containing these objects to the fault identification module 402 for next stage analysis, or only cropped areas of the data frame comprising the detected objects.
   For example, if the object detection model detects missing bolts in five data frames out of 2000, then the pre-detection module may send only the five data frame with the missing bolt to the fault identification module for prompting the VML 404 to verify if they are actual missing bolts and write a report etc. In a further example, if the object detection model detects a component or region of interest, such as the bogie area of a train, in 20 frames out of 2000, then the pre-detection module 202 may send only the 20 frames containing the component or region of interest for the VLM 404 to inspect.
- Use the anomaly detection model to detect changes from 'normal' and/or changes between a reference data frame and the query data frame for each frame of an inspection video. Any data frames determined to comprise a threshold degree of change or anomaly present may be sent to the fault identification module for next stage analysis.
- When the data frames form video footage, extract a selection of the video frames such that the entire vehicle 10 (e.g., a train) is captured in a series of images. This can be done by considering the movement of the vehicle 10 and performing localisation as described above, to either create a long stitched image of the entire vehicle 10, or create several images that may overlap slightly but will comprise fewer images than the number of data frames in the video footage. For example, 2000 data frames may be reduced to 100 data frames that capture the entire length of the vehicle 10. These images are then sent to the VLM 404, via the fault identification module 402, to perform the inspection.

The fault identification module 402 comprises two parts: an image preprocessor 4020 for preprocessing the incoming data frames for VLM analysis, and a VLM descriptor query module 4022 which is configured to generate prompts and query the VLM 404 using the processed data frames.

The image preprocessor 4020 is configured to process the received data frames using various image processing techniques to increase performance of the comparisons conducted by the VLM. The image processing techniques can include algorithms like edge detection, saturation, cropping, segmentation and background removal, etc.

For example, the image pre-processor 4020 may be configured to highlight a target zone of the data frame that was indicated by the object detection module 206 or the anomaly detection module 208 as containing an anomaly or known fault.

For example, the anomaly detection module may be configured to output a mask of an area of the data frame where an anomaly is predicted to be. The object detection module may be configured to provide bounding box information for where a detected fault or other component is determined to be located in the data frame. Based on this information, the image pre-processing module 4020 may be configured to add a bounding box to the query data frame, or apply blurring or masking to other regions of the data frame which are outside of the target zone. Pre-processing the data frames in this way has been found to help focus the attention of the VLM 404 for improving the fault identification and description accuracy of the VLM 404. Further methods for focussing the attention of the VLM are discussed below.

In examples where the data frames are not images but other types of sensor data, similar pre-processing such as frequency filtering and/or cropping etc may be performed to focus the attention of the VLM 404 in a similar way.

Once the image pre-processing is applied by the pre-processing module 4020, the data frames, reference images and localization information are provided to the VLM descriptor query module 4022 for compilation into a prompt which is sent to the VLM 404. The VLM descriptor query module 4022 is configured to prompt the VLM 404 to verify the presence of the detected faults and/or anomalies as well as identify the (type of) detected faults and/or anomalies. Additionally, the VLM descriptor query module 4022 is configured to prompt the VLM 404 to generate a descriptor describing the identified fault in the pre-processed data frame.

The VLM 404 is configured to use the prompt and accompanying input information to compare the query data frame to the reference data frame, and use its general knowledge and logic to determine a severity level of any detected faults in the data frame.

The performance of VLMs can be improved by improving their attention to focus on specific parts of a data frame and by providing additional information/ context for the current situation. Therefore, the more specific the prompt and image provided, the better the result. Accordingly, as mentioned above, the vehicle inspection system 1 is configured to improve performance by assisting the VLM 404 by encouraging attention towards the areas of interest of the data frame. Accordingly, one or more of the following methods is used to increase the focus of the VLM 404, thereby improving performance:
- The VLM 404 is provided with a reference frame showing the same area of the train for the query image (where the query image is the frame or image from the video stream). As discussed above, this enables the VLM 404 to directly compare the reference and query data frames.
- The VLM can be provided with details about the specific location of a potential fault found by another model in previous stage of the pipeline. For example, the object detection model can provide the image and the bounding box co-ordinates of where the fault is in the image. Additionally, the anomaly detection model can provide the data frame and a map of which pixels of the data frame are predicted to represent a change (relative to the reference image). The VLM attention can be focused towards these co-ordinates by applying a mask to the image, masking less important areas. In some examples, the mask may be semi-transparent as they might still contain some detail relevant for interpretation/analysis.
- Further maintenance / inspection OT knowledge, for example, from a maintenance knowledge database 500 as shown in Fig. 3, can be provided as text prompts so that the VLM 404 knows what to look for. For example, the prompt may contain information about the specific types of faults to look for or the different descriptions that constitute different levels of degradation etc. along with information indicating what type of fault constitutes a significant fault that should be reported.
- Further, the results from the localisation module 202 can be used to identify the relevant knowledge/reference material in the maintenance knowledge database 500 for the specific components/ area of the vehicle 10 that the data frame is associated with. For example, additional reference frames may be retrieved from technical maintenance manuals stored in a maintenance knowledge database 500 for combination with the prompts using RAG (Retrieval-Augmented Generation) techniques.
- In further examples, a series of reference frames corresponding to the same part of the vehicle 10 (e.g. with different lighting conditions) may be provided to the VLM 404 for the comparison.

If the VLM 404 determines a detected fault in the data frame to be significant, the resulting description of the detected fault is provided to a fault handler 408 for review.

The fault handler 408 is configured to determine one or more actions for addressing the detected vehicle fault. After receipt of the fault descriptor from the fault identification module 402, the VLM 404 is prompted, again, by the fault handler 408 to generate one or more follow-up actions based on the described fault and inspection.

The fault handler 408 is configured to reference documentation and reference material, e.g., stored in the maintenance knowledge database 500, to determine follow-up actions. For example, the maintenance knowledge data base may include inspection and/or maintenance instructions such as manuals, report formats, defect and business priorities etc. The fault handler 402 is configured to provide information retrieved from said reference documentation to the VLM 404 to assist in determining a maintenance action. The fault handler 408 may be configured to use the location on the vehicle 10 corresponding to the data frame to retrieve one or more relevant portioned of the reference documentation for prompting the VLM.

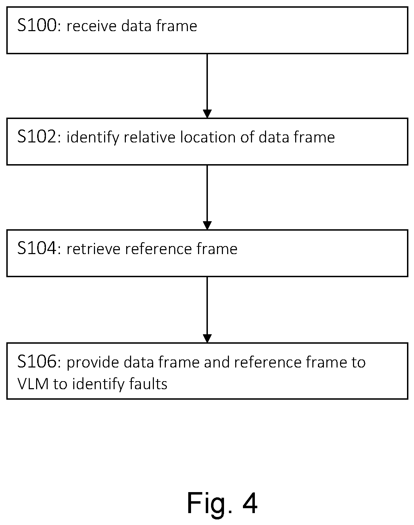

The fault handler 408 also has access to an action handler 600 comprising various tools/APIs (Application Programming Interface) to help conduct the actions, once the follow-up actions have been determined. The aforementioned tools and APIs can include, but are not limited to issue tracker systems, messaging systems, maintenance scheduling systems, etc which are accessible via respective messaging APIs 4060 and system APIs 4062 as shown in Fig. 4. The fault handler 408 is configured to communicate the details of the fault and, optionally, the suggested follow-up actions to one or more client devices 600n, via the APIs of the action handler 406. For example, the APIs may interface to maintenance management software of an organisation.

The action handler 406 may generate an action ticket for transition to a client device 600n in order to notify an operator or engineer to perform the determined maintenance action. The fault descriptor and/or a maintenance ticket with the suggested maintenance action can be displayed on a user interface of the client device 600n.

An operator or engineer may send validation responses or queries in response back to the fault handler 408 e.g., via the client device 600n and the APIs 4060, 4062. The fault handler 408 can then re-prompt the VLM 404 with the responses to generate a subsequent action or response.

Fig. 4 shows a flow diagram of a process for inspecting a vehicle 10 for faults. The process may be performed by one or more processors of a vehicle inspection system 1 discussed above.

First, in step S100 a data frame is received from a data collection system, the data frame comprising sensor data indicative of a status of the vehicle such as an image frame etc.

Next, in step S102 a location on the vehicle which corresponds to the sensor data in the data frame is determined. For example, this step may include one of the localisation techniques discussed above in relation to Fig. 3 wherein data frames from the data collection system are aligned with corresponding reference frames in a reference data base using image registration techniques.

Next, in step S104 the determined location is used to retrieve a reference frame from the database of reference frames, the reference frame comprising reference sensor data which corresponds to the same location on the vehicle.

Finally, in step S106 the data frame and the corresponding reference frame are proved to a visual large language model (VLM) to determine from the data frame and the reference frame if the vehicle has a vehicle fault in the determined location. The VLM is configured to return a description of the identified fault e.g., for provision to a maintenance system or engineer.

In this way, the methods and system of the present disclosure provide a reliable and accurate autonomous vehicle inspection means which can reduce inspection time and improve vehicle safety.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A vehicle inspection system for identifying faults on a vehicle, the vehicle inspection system comprising:
a data input module configured to:
receive a data frame comprising sensor data indicative of a status of the vehicle;
a localisation module configured to:
determine a location on the vehicle which corresponds to the sensor data in the data frame, and
use the location to retrieve a reference frame from a database of reference frames, the reference frame comprising reference sensor data which corresponds to the determined location on the vehicle; and
a fault identification module configured to:
provide the data frame and the reference frame to a visual large language model, VLM, to determine from the data frame and the reference frame if the vehicle has a fault in the determined location.

2. The vehicle inspection system of claim 1 wherein the VLM is further configured to identify the fault and generate a description of the identified fault.

3. The vehicle inspection system of any preceding claim further comprising a pre-detection module configured to detect one or more predetermined faults and/or anomalies in the data frame,
wherein the pre-detection module is configured to provide the data frame to the fault identification module only when a predetermined fault or an anomaly is detected in the data frame.

4. The vehicle inspection system of claim 3 wherein the pre-detection module comprises an object detection module configured to provide the data frame to a pretrained object detection model and receive, from the pretrained object detection module, a determination of whether one or more predetermined vehicle faults are present in the data frame.

5. The vehicle inspection system according to claim 3 or claim 4 further comprising an anomaly detection module configured to provide the data frame and the reference frame to an anomaly detection model, wherein the anomaly detection model is configured to compare the data frame to the reference frame and determine, from the comparison, whether the data frame comprises an anomaly.

6. The vehicle inspection system according to claim 5 wherein the anomaly detection model is configured to output information identifying a target zone in the data frame where the anomaly was detected, and the anomaly detection module is configured to provide the information identifying the target zone to the fault identification module.

7. The vehicle inspection system according to claim 6 wherein the fault identification module is further configured to pre-process the data frame prior to providing the data frame to the VLM, wherein pre-processing the data frame comprises: applying a filter to the data frame to highlight the target zone in the data frame.

8. The vehicle inspection system according to claim 7 wherein applying the filter comprises masking one or more areas of the data frame which are external to the target zone.

9. The vehicle inspection system according to any preceding claim wherein the data frame is an image frame, and the sensor data is optical image data comprising a portion of the vehicle.

10. The vehicle inspection system according to any preceding claim wherein retrieving the reference frame comprises calculating a transformation distance between the data frame and each of a plurality of reference frames in the database, and selecting the reference frame comprising the lowest transformation distance.

11. The vehicle inspection system according to any of claims 2 to 10 wherein the fault identification module is configured to construct a message based on the description from the VLM and transmit the message to a client device.

12. The vehicle inspection system according to any preceding claim further comprising a data collection sub-system, wherein the data collection sub-system comprises one or more sensor modules, wherein the one or more sensor modules are configured to acquire the data frame for provision to the data input module.

13. The vehicle inspection system according to claim 12 wherein the data collection system comprises a vehicle detector configured to detect the presence of the vehicle and trigger the sensor module to collect a plurality of data frames including the data frame upon detection of the vehicle.

14. The vehicle inspection system according to either claim 12 or 13 wherein the data collection system comprises a vehicle identification module configured to identify the vehicle, wherein the localisation module is configured to use the vehicle identity to determine the relative location on the vehicle of the data frame.

15. A method of identifying faults on a vehicle comprising:
receiving a data frame comprising sensor data indicative of a status of the vehicle;
determining a location on the vehicle which corresponds to the sensor data in the data frame, and
using the determined location to retrieve a reference frame from a database of reference frames, the reference frame comprising reference sensor data which corresponds to the relative location on the vehicle; and
providing the data frame and the reference frame to a visual large language model (VLM) to determine from the data frame and the reference frame if the vehicle comprises a vehicle fault in the determined location.
